# FASCICULE DE BREVET EUROPEEN

(11) **EP 2 556 268 B1**
(45) Date de publication et mention de la délivrance du brevet: **24.12.2014**
(21) Numéro de dépôt: 11715976.4
(22) Date de dépôt: 23.03.2011
(51) Int. Cl.: F16F 15/131

(54) **DOUBLE VOLANT AMORTISSEUR EN PARTICULIER POUR VEHICULE AUTOMOBILE**
ZWEIMASSENSCHWUNGRAD, IM BESONDEREN FÜR EIN KRAFTFAHRZEUG
DAMPER DUAL MASS FLYWHEEL, IN PARTICULAR FOR A MOTOR VEHICLE

(30) Priorité: 09.04.2010 FR 1052703
(43) Date de publication de la demande: 13.02.2013
(73) Titulaire: Valeo Embrayages, 80009 Amiens Cedex 2 (FR)
(72) Inventeur: AIRALDI, Alfio, I-12047 Rocca De Baldi (CN) (IT); BILLO, Alberto, I-12080 Monastero Di Vasco (IT); LANFRANCO, Gianbattista, I-10046 Poirino (TO) (IT); ROST, Jon, F-80000 Aminens (FR)
(86) Numéro de dépôt international: PCT/FR2011/050612
(87) Numéro de publication internationale: WO 2011/124805

(56) Documents cités:
- DE-A1- 4 317 332
- FR-A1- 2 690 722

## Description

L'invention concerne un double volant amortisseur, notamment pour véhicule automobile.

Le document FR 2 765 293 décrit un double volant amortisseur comprenant un volant d'inertie primaire destiné à être fixé en bout d'un vilebrequin au voisinage de sa périphérie interne par des vis engagées dans des orifices du volant primaire, et un volant d'inertie secondaire coaxial au volant primaire et centré et guidé en rotation à sa périphérie interne sur le volant primaire au moyen d'un palier. Un amortisseur de torsion ainsi que des moyens de frottement pour l'absorption et l'amortissement des vibrations et des acyclismes de rotation sont montés entre les deux volants d'inertie.

Le double volant amortisseur comporte en outre des moyens de retenue des vis entre les deux volants permettant d'éviter la perte accidentelle des vis avant fixation du volant primaire sur le vilebrequin.

Ces moyens de retenue sont constitués par un organe annulaire présentant des orifices de passage des vis et des pattes longitudinales délimitant des cages cylindriques s'étendant axialement depuis les bords des orifices, ces pattes étant destinées à s'appliquer élastiquement sur les contours des têtes de vis. Les extrémités libres des pattes de chaque cage délimitent entre elles une ouverture de passage d'un outil de vissage et permettent l'accès à la tête de vis.

Avant montage du double volant amortisseur sur le vilebrequin, les vis traversant les orifices précités sont maintenues dans les cages formées par les pattes élastiques. Lors de la fixation du double volant amortisseur sur l'extrémité du vilebrequin par vissage des vis, les têtes de vis sortent progressivement des cages et s'appliquent sur le volant primaire.

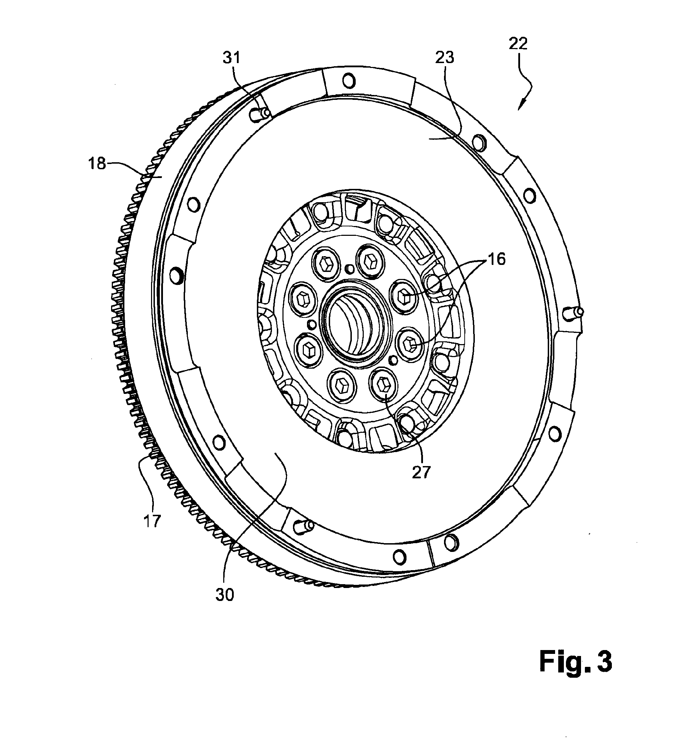

Comme on peut le voir notamment en figure 3 du document précité, cette solution connue a un encombrement axial important.

Le document FR 2 690 722 décrit également un double volant amortisseur comportant des moyens de retenue des vis avant fixation du volant primaire sur le vilebrequin, formés par un jonc élastique fendu ou par un film adhésif. On voit également dans ce document que les bagues externe et interne du rouleau de centrage et de guidage du volant secondaire sont maintenues axialement par des épaulements des volants et par des circlips montés dans des rainures formées dans les volants. Une telle structure comporte un nombre d'éléments important, elle nécessite l'usinage des rainures de montage des circlips et son coût est élevé. En outre, l'utilisation de circlips augmente l'encombrement axial du double volant amortisseur et nécessite l'utilisation d'outils spécifiques pour leur montage et leur démontage.

Selon un premier aspect, l'invention a notamment pour but d'apporter une solution simple, efficace et économique à ce problème.

A cet effet, elle propose un double volant amortisseur, en particulier pour véhicule automobile, comprenant un volant d'inertie primaire destiné à être fixé en bout d'un vilebrequin au voisinage de sa périphérie interne par des vis engagées dans des orifices du volant primaire, un volant d'inertie secondaire coaxial au volant primaire, centré et guidé en rotation à sa périphérie interne sur le volant primaire au moyen d'un palier, et des moyens de retenue des vis entre les deux volants avant fixation du volant primaire sur le vilebrequin, caractérisé en ce que les moyens de retenue des vis comprennent une tôle annulaire fixée sur le volant secondaire et comportant des orifices de passage des têtes de vis ainsi que des moyens élastiquement déformables d'appui radial sur les têtes de vis, le bord périphérique interne de la tôle annulaire formant un moyen d'appui axial d'une bague du palier de centrage et de guidage en rotation du volant secondaire.

La tôle annulaire comporte ainsi à la fois des moyens de retenue des vis de fixation du volant primaire, et des moyens de maintien axial d'une bague du palier du volant secondaire. Il n'est donc plus nécessaire d'assurer ce maintien axial à l'aide de circlips. Par conséquent, le nombre de pièces et le coût du double volant amortisseur sont réduits, et son montage facilité.

Selon une caractéristique de l'invention, la tôle annulaire est fixée sur le volant secondaire au moyen des rivets de fixation d'un voile annulaire d'un amortisseur de torsion monté entre les volants.

Avantageusement, la tôle annulaire forme une paroi d'étanchéité vis-à-vis d'un lubrifiant contenu dans l'amortisseur de torsion.

En variante, cette étanchéité peut être assurée par une rondelle fixée sur le volant secondaire autour de la tôle annulaire.

Dans un mode de réalisation, la tôle annulaire est entre les deux volants.

En variante, la tôle annulaire est fixée sur une face du volant secondaire tournée du côté opposé au volant primaire.

Selon une autre caractéristique de l'invention, les orifices de la tôle annulaire destinés au passage des vis sont de forme non circulaire et comportent un méplat.

Les méplats facilitent le centrage des vis à l'intérieur des orifices.

Les bords des orifices peuvent comportent des languettes axiales destinées à s'appliquer élastiquement sur les contours des têtes de vis.

Selon une variante de réalisation de l'invention, des bagues en matériau plastique destinées à recevoir les têtes de vis sont montées à force dans les orifices de la tôle annulaire.

De manière avantageuse, les bagues comportent un rebord d'appui sur la tôle annulaire dans le sens correspondant au montage des vis sur le vilebrequin.

Le rebord évite que les bagues passent au travers des orifices en étant entraînées par les vis lors de leur vissage.

En variante, une rondelle est fixée sur le volant secondaire autour de la tôle annulaire pour assurer une étanchéité vis-à-vis d'un lubrifiant d'un amortisseur de torsion monté entre les volants.

Selon un second aspect, l'invention a notamment pour but de proposer un double volant amortisseur particulièrement simple et économique.

A cet effet, elle propose un double volant amortisseur, en particulier pour véhicule automobile, comprenant un volant d'inertie primaire destiné à être fixé en bout d'un vilebrequin au voisinage de sa périphérie interne par des vis engagées dans des orifices du volant primaire, un volant d'inertie secondaire coaxial au volant primaire, centré et guidé en rotation à sa périphérie interne sur le volant primaire au moyen d'un palier, et des moyens de retenue des vis entre les deux volants avant fixation du volant primaire sur le vilebrequin, les moyens de retenue des vis comprennent une tôle annulaire fixée sur le volant secondaire et comportant des orifices de passage des têtes de vis ainsi que des moyens élastiquement déformables d'appui radial sur les têtes de vis, la tôle annulaire étant fixée sur le volant secondaire au moyen de rivets de fixation d'un voile annulaire d'un amortisseur de torsion monté entre les volants et formant une paroi d'étanchéité vis-à-vis d'un lubrifiant contenu dans l'amortisseur de torsion.

Ainsi, la tôle annulaire permet à la fois de retenir les vis de fixation du volant primaire et d'assurer l'étanchéité vis-à-vis du lubrifiant de l'amortisseur de torsion. Par conséquent, le nombre de pièces et le coût du double volant amortisseur sont réduits, et son montage facilité.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en coupe axiale d'une première forme de réalisation d'un double volant amortisseur selon l'invention avant montage en bout du vilebrequin ;
- la figure 2 est une vue en perspective d'une tôle annulaire de retenue des vis de fixation ;
- la figure 3 est une vue en perspective du double volant amortisseur de la figure 1 ;
- la figure 4 est une vue illustrant le positionnement de la tôle annulaire par rapport au volant primaire, ce dernier n'étant représenté que partiellement ;
- la figure 5 est une vue en coupe axiale, d'une deuxième forme de réalisation de l'invention ;
- la figure 6 est une vue en perspective de la tôle annulaire de retenue des vis, selon une troisième forme de réalisation de l'invention ;
- la figure 7 est une vue de détail, en coupe axiale, illustrant une partie d'un double volant amortisseur selon la troisième forme de réalisation de l'invention.

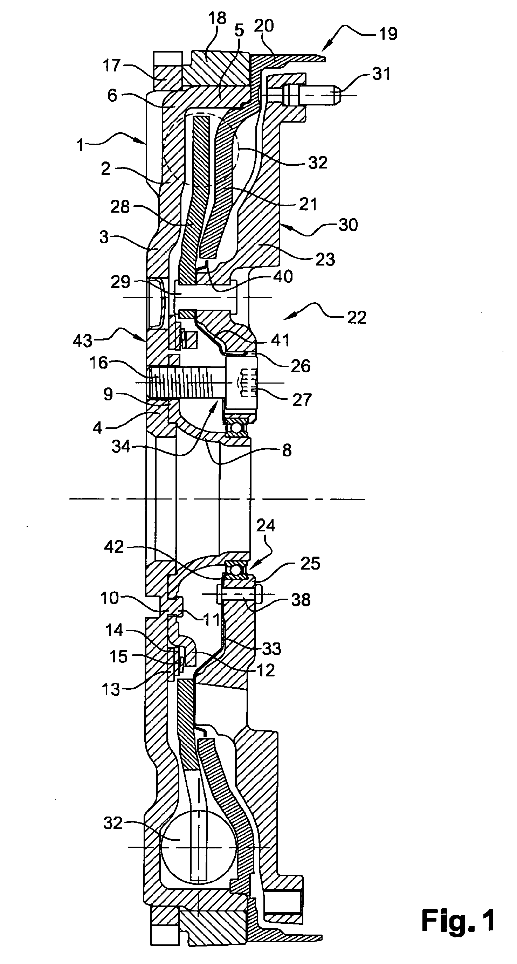

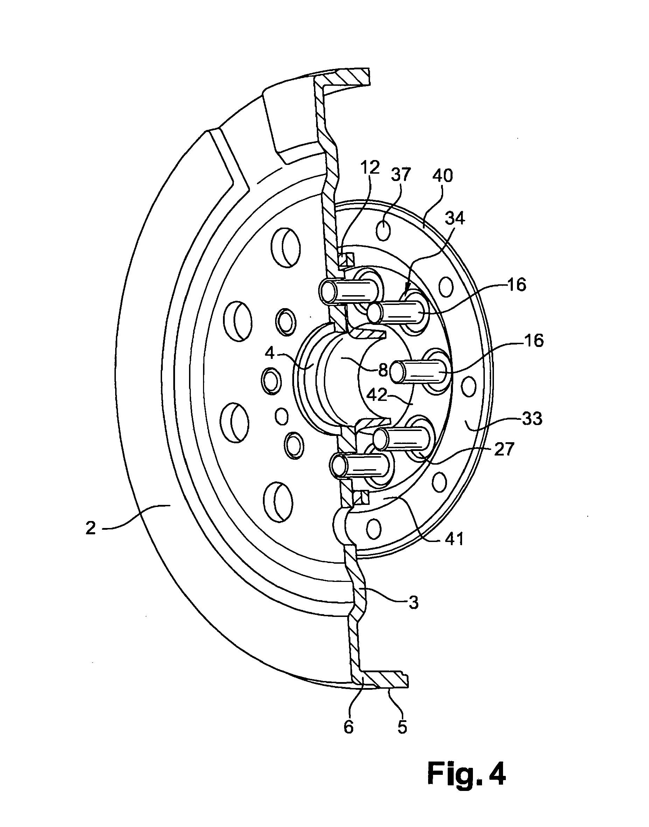

On se réfère d'abord aux figures 1 à 4 qui représentent un double volant amortisseur, en particulier pour véhicule automobile, selon une première forme de réalisation de l'invention, comprenant un volant d'inertie primaire 1 comportant une masse d'inertie annulaire 2 comprenant une partie centrale 3 s'étendant radialement vers l'extérieur à partir d'une périphérie interne 4, et un rebord cylindrique 5 s'étendant axialement depuis la périphérie externe 6 de la partie radiale 3. Un moyeu central 8 est en outre fixé par rivetage sur la périphérie interne 4 de la masse d'inertie 2. Plus particulièrement, le moyeu 8 comporte une bride radiale 9 à son extrémité tournée vers la masse d'inertie 2, et est fixé à celle-ci par des rivets 10 traversant des ouvertures de la bride 9 et comportant des têtes de maintien 11 de celle-ci, les rivets étant formés par déformation de la partie centrale 3 de la masse 2. La périphérie radialement externe de la bride présente un décrochement 12 délimitant un espace annulaire entre la bride 9 et la masse d'inertie 2, dans lequel sont montées une rondelle de frottement 13 et une rondelle de répartition 14 maintenue en appui sur la rondelle de frottement par une rondelle ressort 15 de type Belleville interposée entre la rondelle 14 et la périphérie de la bride 9.

La masse d'inertie 2 et la bride 9 sont formées avec une rangée circulaire de trous de passage de vis 16, destinées à la fixation du double volant amortisseur en bout d'un vilebrequin d'un moteur.

Une couronne dentée 17 est fixée à la périphérie externe 6 de la partie radiale 3 de la masse d'inertie 2 pour l'entraînement en rotation du volant primaire 1 à l'aide d'un démarreur. Une masse d'inertie additionnelle 18 est montée autour du rebord cylindrique 5 de la masse d'inertie 2, du côté opposé au moteur. Enfin, un couvercle 19 est monté sur l'extrémité libre du rebord cylindrique 5, et de la masse d'inertie additionnelle 18, ledit couvercle 19 comportant une partie cylindrique 20 s'étendant axialement dans le prolongement de la masse d'inertie additionnelle 18, et une partie 21 s'étendant radialement vers l'axe de rotation à l'intérieur du rebord cylindrique 5.

Le double volant amortisseur comporte en outre un volant d'inertie secondaire 22 comportant une masse d'inertie annulaire 23 s'étendant radialement et centrée et guidée en rotation sur le moyeu central 8 par l'intermédiaire d'un palier formé d'un roulement à billes 24. Plus particulièrement, la périphérie interne 25 de la masse d'inertie 23 comporte un épaulement servant à l'appui de la bague externe du roulement 24 et qui retient cette bague dans le sens opposé au moteur. De même, le moyeu central 8 comporte un épaulement, de sens opposé au précédent, servant à l'appui de la bague interne du roulement 24.

La masse d'inertie 23 du volant secondaire 22 comporte des orifices 26 destinés à loger les têtes 27 des vis 16 avant montage du double volant amortisseur sur le vilebrequin. Un voile annulaire 28, s'étendant radialement entre la masse d'inertie 2 du volant primaire 1 et la partie radiale 21 du couvercle 19, est en outre fixé par l'intermédiaire de rivets 29 au niveau de sa périphérie interne, sur la masse d'inertie 23 du volant secondaire 22.

La masse d'inertie 23 du volant secondaire 22 comporte une surface annulaire plane 30, tournée du côté opposé au volant primaire 1, formant une surface d'appui pour des garnitures d'un disque de friction d'embrayage non représenté. La périphérie externe de cette masse d'inertie 23 comporte également des plots 31 servant au montage d'un couvercle d'embrayage.

Des ressorts 32 d'un amortisseur de torsion sont montés entre le volant primaire 1 et le voile annulaire 28 couplé au volant secondaire 22. Les ressorts 32 sont comprimés lors des oscillations du volant primaire 1 par rapport au volant secondaire 22. Lors de ces oscillations, la rondelle de frottement 13 est entraînée par le voile 28, bien que cela ne soit pas visible sur les dessins du fait de la position de la coupe. Ces éléments forment des moyens de frottement dits « à hystérésis » permettant, avec les ressorts 32, d'absorber et d'amortir les vibrations et les acyclismes de rotation du moteur.

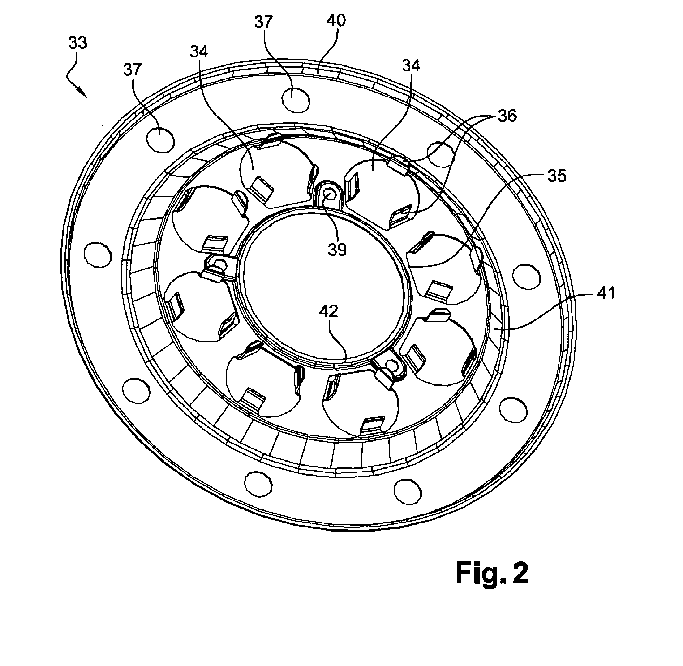

Selon l'invention, une tôle annulaire radiale 33 est montée entre les deux masses d'inertie 2, 23 et comporte huit orifices 34 de passage des vis 16 de fixation du volant primaire. Chaque orifice de passage 34 peut comporter un méplat 35 (figure 2) du côté de la périphérie radialement interne de la tôle annulaire 33 et trois languettes élastiques 36 qui s'étendent axialement à l'intérieur des orifices 26 du volant secondaire 22. Les languettes 36 sont agencées angulairement à environ 180 ° les unes des autres et ont une longueur inférieure à celle de la tête des vis. La périphérie radialement externe de la tôle annulaire 33 est pourvue de trous de passage 37 des rivets 29, et est fixée à l'aide de ces rivets 29, entre la périphérie radialement interne du voile 28 et la masse d'inertie 23 du volant secondaire 22, de manière à être couplée en rotation à ces différents éléments. La tôle 33 est également fixée à la masse d'inertie 23 par des rivets additionnels 38 au niveau de sa périphérie interne. Des trous additionnels 39 sont prévus à cet effet dans la tôle annulaire 33 (figure 2).

La périphérie radialement externe de la tôle forme une lèvre cambrée 40 située à proximité de la périphérie radialement interne de la partie radiale 21 du couvercle 19. Le jeu entre ces deux éléments étant faible, la tôle 33 assure une certaine étanchéité à cet endroit vis-à-vis du lubrifiant ou de la graisse qui remplit la chambre contenant les ressorts 32, délimitée par le volant primaire et la partie radiale 21 du couvercle 19.

La cambrure 41 de la tôle 33, entre les orifices 37 de passage des rivets 29 et les orifices 34 de passage des vis 16, suit la cambrure de la masse d'inertie 23 du volant secondaire 22.

Enfin, la périphérie radialement interne 42 de la tôle annulaire 33 forme une butée pour la bague externe du roulement à billes 24, à l'opposé de l'épaulement formé à la périphérie interne du volant secondaire.

Avant montage du double volant amortisseur sur le vilebrequin, les têtes 27 des vis 16 s'étendent à l'intérieur des orifices 34, 26 de la tôle annulaire 33 et de la masse d'inertie 23 du volant secondaire 22, la partie filetée des vis 16 s'étendant dans les orifices correspondants de la masse d'inertie 2 du volant primaire 1. Les vis 16 assurent ainsi un blocage en rotation des deux volants 1, 22. Les languettes 36 retenant les têtes de vis 27, on évite tout risque de perte accidentelle des vis 16.

Les têtes de vis 27 prennent appui contre les méplats 35, ce qui facilite leur centrage par rapport aux orifices 34 de la tôle annulaire 33, et sont retenues entre les languettes élastiques 36 qui s'appuient radialement sur leur contour. Les extrémités des vis affleurent ainsi la surface 43 de la masse d'inertie 2 du volant primaire 1 tournée du côté du vilebrequin.

Par vissage, les têtes de vis 27 sortent des orifices 34, 26 et viennent en appui contre la bride 9 du moyeu 8.

Selon une variante de réalisation de l'invention non représentée, des ouvertures sont ménagées dans la tôle annulaire 33, dans la zone annulaire cambrée 41 comprise entre les orifices 37 de passage des rivets 29 et les orifices 34 de passage des vis 16.

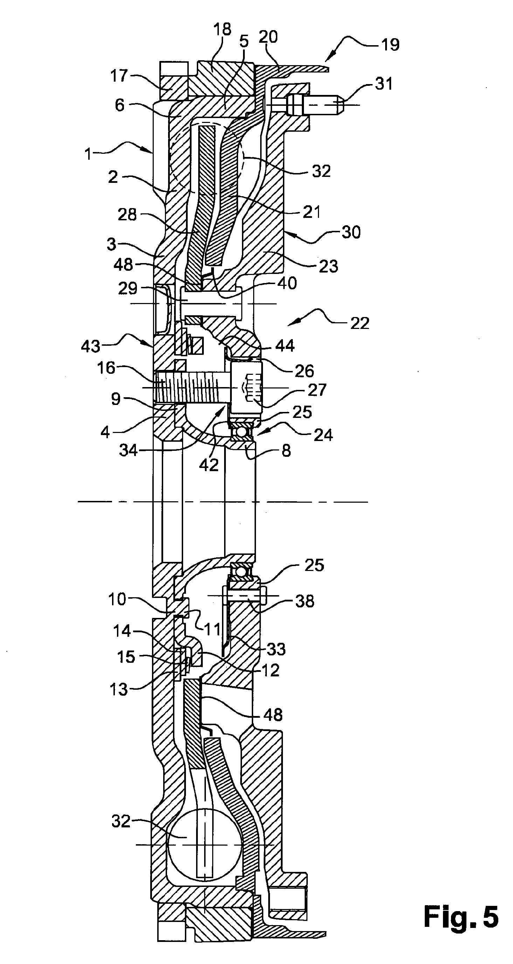

La figure 5 illustre une variante de réalisation de l'invention dans laquelle le diamètre externe de la tôle 33 est limité de façon à ce qu'elle ne s'étende pas radialement en regard et au-delà de la cambrure précitée de la masse d'inertie 23 du volant secondaire 22. La tôle 33 ne comporte donc pas de cambrure et est maintenue par les rivets 38. Une rondelle additionnelle 48, dont la forme est similaire à la périphérie externe de la tôle 33 des figures 1 à 4, est fixée à l'aide des rivets 29 entre la périphérie radialement interne du voile 28 et la masse d'inertie 23, à l'extérieur de la tôle 33.

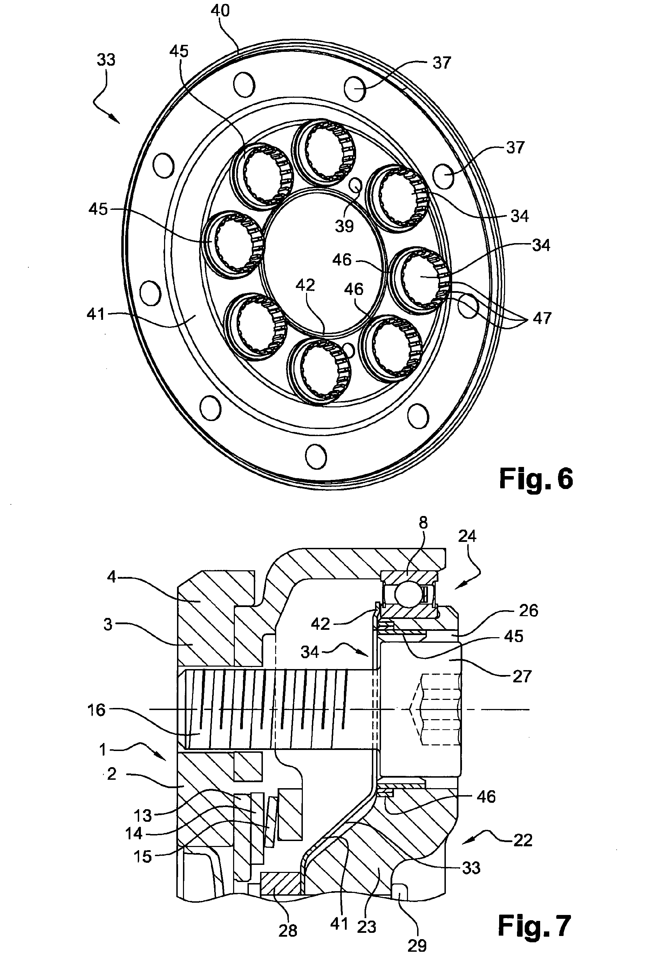

Les figures 6 et 7 montrent une autre forme de réalisation de l'invention dans laquelle des bagues 45 en matériau plastique destinées à recevoir les têtes de vis 27 sont montées à force dans les orifices 34 de la tôle annulaire 33. Les bagues 45 comportent un rebord d'appui 46 sur la tôle annulaire 33 dans le sens correspondant au montage des vis 16 sur le vilebrequin. Les surfaces internes des bagues comportent des nervures 47 axiales faisant saillie radialement vers l'intérieur de manière à prendre appui contre le contour des têtes de vis 27 et assurer ainsi leur maintien en position. Les bagues 45 sont montées dans les orifices 26 de la masse d'inertie 23 du volant secondaire 22, les rebords 46 étant logés dans des lamages correspondants de la masse d'inertie 23.

Le fonctionnement de cette variante d'exécution est similaire à celui des formes d'exécution précédentes puisque les têtes de vis 27 sont retenues dans les orifices 34, 26 de la tôle annulaire 33 et de la masse d'inertie 23 du volant secondaire 22, avant montage du double volant amortisseur sur le vilebrequin, et sont sorties desdits orifices 34, 26 et des bagues 45 après montage du double volant amortisseur sur le vilebrequin.

L'invention propose ainsi une tôle 33 servant à la fois à retenir les vis 16 et à former un appui axial d'une bague du roulement à billes 24. Il n'est donc plus nécessaire d'assurer cet appui axial à l'aide de circlips et de former par usinage des rainures de montage de ces circlips dans le moyeu 8 et/ou dans le volant secondaire 23. Par conséquent, le nombre de pièces et le coût du double volant amortisseur sont réduits, et le montage de ce dernier est facilité. En outre, la tôle annulaire 33 forme une paroi d'étanchéité vis-à-vis d'un lubrifiant contenu dans l'amortisseur de torsion, dans les formes de réalisation des figures 1 à 4, 6 et 7, cette étanchéité étant assurée par la rondelle 48 dans la forme de réalisation de la figure 5.

## Revendications

1. Double volant amortisseur, en particulier pour véhicule automobile, comprenant un volant d'inertie primaire (1) destiné à être fixé en bout d'un vilebrequin au voisinage de sa périphérie interne (4) par des vis (16) engagées dans des orifices du volant primaire (1), un volant d'inertie secondaire (22) coaxial au volant primaire (1), centré et guidé en rotation à sa périphérie interne sur le volant primaire au moyen d'un palier (24), et des moyens (36, 45) de retenue des vis (16) entre les deux volants (1, 22) avant fixation du volant primaire (1) sur le vilebrequin,
**caractérisé en ce que** les moyens de retenue des vis comprennent une tôle annulaire (33) fixée sur le volant secondaire (22) et comportant des orifices (34) de passage des têtes de vis (27) ainsi que des moyens élastiquement déformables (36) d'appui radial sur les têtes de vis (27), le bord périphérique interne (42) de la tôle annulaire (33) formant un moyen d'appui axial d'une bague du palier (24) de centrage et de guidage en rotation du volant secondaire (22).

2. Double volant amortisseur selon la revendication 1, **caractérisé en ce que** la tôle annulaire (33) est fixée sur le volant secondaire (22) au moyen de rivets de fixation (29) d'un voile annulaire (28) d'un amortisseur de torsion monté entre les volants (1, 22).

3. Double volant amortisseur selon la revendication 2, **caractérisé en ce que** la tôle annulaire (33) forme une paroi d'étanchéité vis-à-vis d'un lubrifiant contenu dans l'amortisseur de torsion.

4. Double volant amortisseur selon l'une des revendications 1 à 3, **caractérisé en ce que** la tôle annulaire (33) est entre les deux volants (1, 22).

5. Double volant amortisseur selon l'une des revendications 1 à 3, **caractérisé en ce que** la tôle annulaire (33) est fixée sur une face du volant secondaire (22) tournée du côté opposé au volant primaire (1).

6. Double volant amortisseur selon l'une des revendications 1 à 5, **caractérisé en ce que** les orifices (34) de la tôle annulaire (33) destinés au passage des vis (16) sont de forme non circulaire et comportent un méplat (35).

7. Double volant amortisseur selon l'une des revendications 1 à 6, **caractérisé en ce que** les bords des orifices (34) de la tôle annulaire comportent des languettes axiales (36) destinées à s'appliquer élastiquement sur les contours des têtes de vis (27).

8. Double volant amortisseur selon l'une des revendications 1 à 6, **caractérisé en ce que** des bagues (45) en matériau plastique destinées à recevoir les têtes de vis (27) sont montées à force dans les orifices (34) de la tôle annulaire (33).

9. Double volant amortisseur selon la revendication 8, **caractérisé en ce que** les bagues (45) comportent un rebord d'appui (46) sur la tôle annulaire (33) dans le sens correspondant au montage des vis (16) sur le vilebrequin.

10. Double volant amortisseur selon la revendication 1, **caractérisé en ce qu'**une rondelle (48) est fixée sur le volant secondaire (22) autour de la tôle annulaire (33) pour assurer une étanchéité vis-à-vis d'un lubrifiant d'un amortisseur de torsion monté entre les volants.

11. Double volant amortisseur, en particulier pour véhicule automobile, comprenant un volant d'inertie primaire (1) destiné à être fixé en bout d'un vilebrequin au voisinage de sa périphérie interne (4) par des vis (16) engagées dans des orifices du volant primaire (1), un volant d'inertie secondaire (22) coaxial au volant primaire (1), centré et guidé en rotation à sa périphérie interne sur le volant primaire au moyen d'un palier (24), et des moyens (36, 45) de retenue des vis (16) entre les deux volants (1, 22) avant fixation du volant primaire (1) sur le vilebrequin,
**caractérisé en ce que** les moyens de retenue des vis comprennent une tôle annulaire (33) fixée sur le volant secondaire (22) et comportant des orifices (34) de passage des têtes de vis (27) ainsi que des moyens élastiquement déformables (36) d'appui radial sur les têtes de vis (27), la tôle annulaire (33) étant fixée sur le volant secondaire (22) au moyen de rivets de fixation (29) d'un voile annulaire (28) d'un amortisseur de torsion monté entre les volants (1, 22) et formant une paroi d'étanchéité vis-à-vis d'un lubrifiant contenu dans l'amortisseur de torsion.

12. Double volant amortisseur selon l'une des revendications 1 à 3, **caractérisé en ce que** la tôle annulaire (33) est entre les deux volants (1, 22).

13. Double volant amortisseur selon l'une des revendications 1 à 3, **caractérisé en ce que** la tôle annulaire (33) est fixée sur une face du volant secondaire (22) tournée du côté opposé au volant primaire (1).

## Patentansprüche

1. Zweimassenschwungrad, insbesondere für ein Kraftfahrzeug, das ein primäres Schwungrad (1), welches dazu bestimmt ist, in der Nähe seines inneren Umfangs (4) durch in Öffnungen des primären Schwungrads (1) eingeführte Schrauben (16) am Ende einer Kurbelwelle befestigt zu werden, ein sekundäres Schwungrad (22) koaxial zum primären Schwungrad (1), das an seinem inneren Umfang mittels eines Lagers (24) auf dem primären Schwungrad zentriert und in Drehung geführt wird, und Einrichtungen (36, 45) für den Halt der Schrauben (16) zwischen den zwei Schwungrädern (1, 22) vor der Befestigung des primären Schwungrads (1) an der Kurbelwelle enthält,
**dadurch gekennzeichnet, dass** die Halteeinrichtungen der Schrauben ein Ringblech (33), das am sekundären Schwungrad (22) befestigt ist und Durchgangsöffnungen (34) für die Schraubenköpfe (27) aufweist, sowie elastisch verformbare Einrichtungen (36) zur radialen Auflage auf den Schraubenköpfen (27) enthalten, wobei der innere Umfangsrand (42) des Ringblechs (33) eine axiale Auflageeinrichtung für einen Ring des Zentrier- und Drehführungslagers (24) des sekundären Schwungrads (22) bildet.

2. Zweimassenschwungrad nach Anspruch 1, **dadurch gekennzeichnet, dass** das Ringblech (33) am sekundären Schwungrad (22) mittels Befestigungsnieten (29) einer ringförmigen Abdeckung (28) eines zwischen den Schwungrädern (1, 22) montierten Torsionsdämpfers befestigt ist.

3. Zweimassenschwungrad nach Anspruch 2, **dadurch gekennzeichnet, dass** das Ringblech (33) eine Abdichtungswand gegenüber einem im Torsionsdämpfer enthaltenen Schmiermittel bildet.

4. Zweimassenschwungrad nach einem der Ansprüche 1 bis 3, **dadurch gekennzeichnet, dass** das Ringblech (33) sich zwischen den zwei Schwungrädern (1, 22) befindet.

5. Zweimassenschwungrad nach einem der Ansprüche 1 bis 3, **dadurch gekennzeichnet, dass** das Ringblech (33) an einer Seite des sekundären Schwungrads (22) befestigt ist, die zur dem primären Schwungrad (1) entgegengesetzten Seite weist.

6. Zweimassenschwungrad nach einem der Ansprüche 1 bis 5, **dadurch gekennzeichnet, dass** die für den Durchgang der Schrauben (16) bestimmten Öffnungen (34) des Ringblechs (33) nicht kreisförmig sind und eine Abflachung (35) aufweisen.

7. Zweimassenschwungrad nach einem der Ansprüche 1 bis 6, **dadurch gekennzeichnet, dass** die Ränder der Öffnungen (34) des Ringblechs axiale Zungen (36) aufweisen, die dazu bestimmt sind, sich elastisch auf die Umrisse der Schraubenköpfe (27) aufzulegen.

8. Zweimassenschwungrad nach einem der Ansprüche 1 bis 6, **dadurch gekennzeichnet, dass** Ringe (45) aus Kunststoff, die dazu bestimmt sind, die Schraubenköpfe (27) aufzunehmen, in die Öffnungen (34) des Ringblechs (33) presseingepasst werden.

9. Zweimassenschwungrad nach Anspruch 8, **dadurch gekennzeichnet, dass** die Ringe (45) eine Auflagerandleiste (46) auf dem Ringblech (33) in der Richtung entsprechend der Montage der Schrauben (16) auf die Kurbelwelle aufweisen.

10. Zweimassenschwungrad nach Anspruch 1, **dadurch gekennzeichnet, dass** eine Unterlegscheibe (48) am sekundären Schwungrad (22) um das Ringblech (33) herum befestigt ist, um eine Dichtheit gegenüber einem Schmiermittel eines zwischen den Schwungrädern montierten Torsionsdämpfers zu gewährleisten.

11. Zweimassenschwungrad, insbesondere für ein Kraftfahrzeug, das ein primäres Schwungrad (1), welches dazu bestimmt ist, in der Nähe seines inneren Umfangs (4) durch in Öffnungen des primären Schwungrads (1) eingeführte Schrauben (16) am Ende einer Kurbelwelle befestigt zu werden, ein sekundäres Schwungrad (22) koaxial zum primären Schwungrad (1), das an seinem inneren Umfang mittels eines Lagers (24) auf dem primären Schwungrad zentriert und in Drehung geführt wird, und Einrichtungen (36, 45) für den Halt der Schrauben (16) zwischen den zwei Schwungrädern (1, 22) vor der Befestigung des primären Schwungrads (1) an der Kurbelwelle enthält,
**dadurch gekennzeichnet, dass** die Halteeinrichtungen der Schrauben ein Ringblech (33), das am sekundären Schwungrad (22) befestigt ist und Durchgangsöffnungen (34) für die Schraubenköpfe (27) aufweist, sowie elastisch verformbare Einrichtungen (36) zur radialen Auflage auf den Schraubenköpfen (27) enthält, wobei das Ringblech (33) am sekundären Schwungrad (22) mittels Befestigungsnieten (29) einer ringförmigen Abdeckung (28) eines zwischen die Schwungräder (1, 22) montierten Torsionsdämpfers befestigt ist und eine Abdichtungswand gegenüber einem im Torsionsdämpfer enthaltenen Schmiermittel bildet.

12. Zweimassenschwungrad nach einem der Ansprüche 1 bis 3, **dadurch gekennzeichnet, dass** das Ringblech (33) sich zwischen den zwei Schwungrädern (1, 22) befindet.

13. Zweimassenschwungrad nach einem der Ansprüche 1 bis 3, **dadurch gekennzeichnet, dass** das Ringblech (33) an einer Seite des sekundären Schwungrads (22) befestigt ist, die zur dem primären Schwungrad (1) entgegengesetzten Seite weist.

## Claims

1. Damper dual mass flywheel, in particular for a motor vehicle, comprising a primary flywheel (1) intended to be fastened at the end of a crankshaft in the vicinity of its inner periphery (4) by screws (16) engaged in orifices in the primary flywheel (1), a secondary flywheel (22) coaxial to the primary flywheel (1) and centred and rotatably guided at its inner periphery on the primary flywheel by means of a bearing (24), and means (36, 45) for retaining the screws (16) between the two flywheels (1, 22) before fastening the primary flywheel (1) to the crankshaft, **characterized in that** the means for retaining the screws comprise an annular metal sheet (33) fastened to the secondary flywheel (22) and comprising orifices (34) for the passage of the screw heads (27), and elastically deformable means (36) for radial support on the screw heads (27), the inner peripheral edge (42) of the annular metal sheet (33) forming a means for axially supporting a ring of the bearing (24) for centring and for rotatably guiding the secondary flywheel (22).

2. Damper dual mass flywheel according to Claim 1, **characterized in that** the annular metal sheet (33) is fastened to the secondary flywheel (22) by means of rivets (29) for fastening an annular plate (28) of a torsion damper mounted between the flywheels (1, 22).

3. Damper dual mass flywheel according to Claim 2, **characterized in that** the annular metal sheet (33) forms a sealing wall which is sealed with respect to a lubricant contained in the torsion damper.

4. Damper dual mass flywheel according to one of Claims 1 to 3, **characterized in that** the annular metal sheet (33) is between the two flywheels (1, 22).

5. Damper dual mass flywheel according to one of Claims 1 to 3, **characterized in that** the annular metal sheet (33) is fastened to a face of the secondary flywheel (22) that faces the opposite side to the primary flywheel (1).

6. Damper dual mass flywheel according to one of Claims 1 to 5, **characterized in that** the orifices (34) in the annular metal sheet (33) intended for the passage of the screws (16) are of non-circular shape and comprise a flat (35).

7. Damper dual mass flywheel according to one of Claims 1 to 6, **characterized in that** the edges of the orifices (34) in the annular metal sheet comprise axial tongues (36) intended to be pressed elastically against the contours of the screw heads (27).

8. Damper dual mass flywheel according to one of Claims 1 to 6, **characterized in that** plastic rings (45) intended to receive the screw heads (27) are mounted with force in the orifices (34) in the annular metal sheet (33).

9. Damper dual mass flywheel according to Claim 8, **characterized in that** the rings (45) comprise a rim (46) for support on the annular metal sheet (33) in the direction corresponding to the mounting of the screws (16) on the crankshaft.

10. Damper dual mass flywheel according to Claim 1, **characterized in that** a washer (48) is fastened to the secondary flywheel (22) around the annular metal sheet (33) to provide sealing with respect to a lubricant of a torsion damper mounted between the flywheels.

11. Damper dual mass flywheel, in particular for a motor vehicle, comprising a primary flywheel (1) intended to be fastened at the end of a crankshaft in the vicinity of its inner periphery (4) by screws (16) engaged in orifices in the primary flywheel (1), a secondary flywheel (22) coaxial to the primary flywheel (1) and centred and rotatably guided at its inner periphery on the primary flywheel by means of a bearing (24), and means (36, 45) for retaining the screws (16) between the two flywheels (1, 22) before fastening the primary flywheel (1) to the crankshaft, **characterized in that** the means for retaining the screws comprise an annular metal sheet (33) fastened to the secondary flywheel (22) and comprising orifices (34) for the passage of the screw heads (27), and elastically deformable means (36) for radial support on the screw heads (27), the annular metal sheet (33) being fastened to the secondary flywheel (22) by means of rivets (29) for fastening an annular plate (28) of a torsion damper mounted between the flywheels (1, 22) and forming a sealing wall which is sealed with respect to a lubricant contained in the torsion damper.

12. Damper dual mass flywheel according to one of Claims 1 to 3, **characterized in that** the annular metal sheet (33) is between the two flywheels (1, 22).

13. Damper dual mass flywheel according to one of Claims 1 to 3, **characterized in that** the annular metal sheet (33) is fastened to a face of the secondary flywheel (22) that faces the opposite side to the primary flywheel (1).
